# FASCICULE DE BREVET EUROPEEN

(11) **EP 1 803 035 B1**
(45) Date de publication et mention de la délivrance du brevet: **04.07.2018**
(21) Numéro de dépôt: 05815608.4
(22) Date de dépôt: 20.10.2005
(51) Int. Cl.: G03F 7/038

(54) **RIGIDIFICATION DE STRUCTURES A DEPLOIEMENT PAR GONFLAGE, EN PARTICULIER A USAGE SPATIAL**
FESTIGUNG VON STRUKTUREN ZUM EINSATZ DURCH AUFBLASEN, SPEZIELL ZUR VERWENDUNG IM WELTRAUM
RIGIDIFICATION OF STRUCTURES TO BE DEPLOYED BY INFLATING, PARTICULARLY FOR USE IN SPACE

(30) Priorité: 22.10.2004 FR 0452413
(43) Date de publication de la demande: 04.07.2007
(73) Titulaire: ArianeGroup SAS, 75015 Paris (FR)
(72) Inventeur: DEFOORT, Brigitte, F-33160 SAINT MEDARD EN JALLES (FR); COQUERET, Xavier, F-59133 PHALEMPIN (FR); LACOUR, Dominique, F-33370 TRESSES (FR)
(74) Mandataire: Ahner, Philippe
(86) Numéro de dépôt international: PCT/FR2005/050876
(87) Numéro de publication internationale: WO 2006/043009

(56) Documents cités:
- EP-A- 0 182 744
- WO-A-88/02879
- AT-B- 384 025
- US-A- 5 354 784
- US-A1- 2004 148 901
- EDWARD J SIMBURGER ET AL: "New - Development, Design, And Testing Of Powersphere Multifunctional Ultraviolet-Rigidizable Inflatable Structures" AIAA-2003-1897, septembre 2003 (2003-09), pages 1-11, XP002323823
- CADOGAN D P ET AL: "Rigidizable materials for use in gossamer space inflatable structures" 16 avril 2001 (2001-04-16), AIAA/ASME/ASCE/AHS/ASC STRUCTURES, STRUCTURAL DYNAMICS AND MATERIALS CONFERENCE AND EXHIBIT AND AIAA/ASME/AHS ADAPTIVE STRUCTURES FORUM, PAGE(S) 1-18 , XP002323822 page 8, alinéa 2
- PATENT ABSTRACTS OF JAPAN vol. 1996, no. 04, 30 avril 1996 (1996-04-30) & JP 07 316262 A (NIPPON KAYAKU CO LTD), 5 décembre 1995 (1995-12-05)

## Description

### DOMAINE TECHNIQUE

L'invention concerne la rigidification de structures à déploiement par gonflage, en particulier à usage spatial.

Plus spécifiquement, l'invention se rapporte à une membrane souple pour des structures à déploiement par gonflage, à un procédé permettant de rigidifier cette membrane, ainsi qu'aux utilisations de cette membrane et de ce procédé.

L'invention trouve notamment application dans la fabrication de dispositifs de type radars, panneaux solaires, réflecteurs, pares-soleil, antennes, miroirs ou voiles solaires, destinés à équiper des engins orbitaux tels que des satellites, des télescopes ou des stations orbitales, ou des engins d'exploration spatiale ou planétaire tels que des sondes ou des robots.

### ÉTAT DE LA TECHNIQUE ANTÉRIEURE

La réalisation de dispositifs compacts et ultralégers, aptes à se déployer par gonflage après placement en orbite, a été envisagée dès le début de l'ère spatiale.

Elle a donné lieu au dépôt d'un certain nombre de brevets parmi lesquels on peut citer, à titre d'exemples, les brevets américains n° 5,044,579 **[1]** et n° 5,660,644 **[2].**

Ces dispositifs comprennent un ensemble de structures creuses, généralement tubulaires, qui sont constituées de membranes fines pliées de sorte à former un soufflet et dont le déploiement résulte de leur remplissage par un gaz sous pression comme l'azote, qui est stocké dans un réservoir attenant. Ces structures sont aussi connues sous le nom de "structures Gossamer".

L'une des difficultés posées par la réalisation de structures Gossamer est liée à l'agressivité de l'environnement spatial. En effet, l'espace est chargé de micrométéorites susceptibles de percer toute membrane étanche et par là de provoquer des fuites et un dégonflage faisant perdre leur forme aux structures déployées. Il est donc nécessaire de les rigidifier après leur déploiement.

A ce jour, trois grands types de techniques de rigidification ont été proposés : des techniques mécaniques, des techniques physiques et des techniques chimiques.

Les techniques mécaniques consistent à utiliser la pression du gaz de remplissage pour appliquer à une feuille de métal, par exemple d'aluminium, incluse dans la structure une contrainte supérieure à la résistance au formage de ce métal en sorte que, une fois la pression supprimée, la feuille de métal donne à la structure une forme et une rigidité.

Les techniques physiques sont, elles, basées sur une transition de phase (par exemple, le refroidissement d'un matériau à une température inférieure à sa température de transition vitreuse), sur l'utilisation de matériaux à mémoire de forme ou encore sur l'évaporation d'un solvant ou d'un plastifiant présent dans la structure.

Quant aux techniques chimiques, elles visent à induire, par la température ou les ultraviolets, la polymérisation d'une résine, cette polymérisation pouvant être accélérée par des catalyseurs véhiculés par le gaz de remplissage.

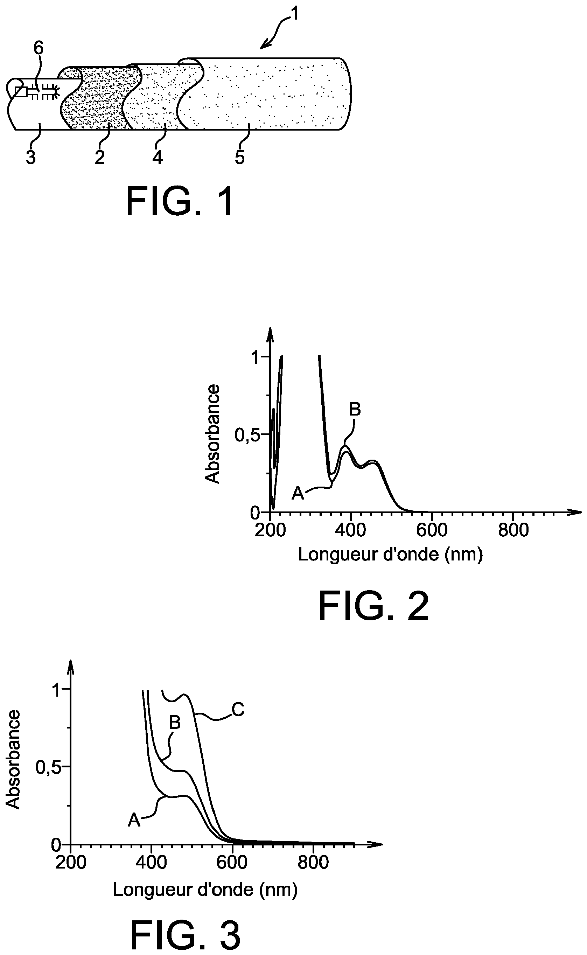

Dans le cadre d'une évaluation de ces différentes techniques, fondée sur les données de la littérature, les Inventeurs sont arrivés à la conclusion que la polymérisation d'une résine induite par les ultraviolets serait l'une des voies de rigidification les plus intéressantes des structures Gossamer, tant en ce qui concerne la fiabilité de cette technique de rigidification, les coûts des matériaux utilisés et de leur mise en oeuvre, que les propriétés mécaniques des structures rigidifiées (données non publiées). Structures à déploiement par gonflage et rigidifiées par lumière uv sont décrites dans Simburger E.J. et al American Institute of Aeronautics and Astronautics ,AIAA-2003-1897,Septembre 2003. La figure 1 jointe en annexe illustre, sous une forme schématique, le type de construction actuellement retenu pour une structure Gossamer destinée à être rigidifiée par polymérisation d'une résine induite par les ultraviolets. Sur cette figure, n'a été volontairement représentée qu'une portion de la structure et à l'état déployé, de manière à rendre visibles les éléments qui la constituent.

Cette structure se présente sous la forme d'un tube 1 dont la paroi est formée par une membrane souple qui comprend une ou plusieurs épaisseurs d'un tissu 2 préimprégné d'une composition à base d'une résine photopolymérisable, prises en sandwich entre deux films minces polymères, respectivement 3 et 4. Ces films ont pour fonction d'assurer l'étanchéité nécessaire au gonflage de la structure et d'éviter que les épaisseurs de tissu imprégné ne se collent entre elles lorsque la membrane est pliée dans la structure avant déploiement, ce qui empêcherait, en effet, le déploiement de la structure.

Une couverture thermique multicouche 5 complète éventuellement ce sandwich.

La structure comporte, par ailleurs, une lampe à ultraviolets 6 qui est disposée à l'intérieur du tube 1.

La composition à base de résine photopolymérisable doit comprendre, outre un oligomère réactif correspondant à la molécule de base de la résine, au moins un photoinitiateur sensible aux ultraviolets, c'est-à-dire un composé qui se décompose lorsqu'il est exposé aux ultraviolets pour produire des espèces chimiques dont le rôle est d'initier la polymérisation de la résine.

Dans le cas d'une structure Gossamer, les polymères constituant les films minces 3 et 4 doivent répondre à des spécifications propres au domaine spatial. En particulier, ces films doivent être capables de supporter des températures extrêmes et présenter des propriétés de résistance mécanique particulièrement élevées. De ce fait, un nombre restreint de polymères est susceptible d'être utilisé. En pratique, il s'agit de polyimides aromatiques, de poly(arylène éther benzimidazole) et de poly-(benzoxazole), les polyimides aromatiques étant actuellement préférés.

Or, dans le cadre de leurs travaux, les Inventeurs ont constaté que ces polymères absorbent fortement la lumière à des longueurs d'onde inférieures à 400 nm, en sorte que leur utilisation est incompatible avec la rigidification d'une structure Gossamer par polymérisation d'une résine induite par des ultraviolets (données non publiées).

Les Inventeurs se sont donc fixés pour but de fournir une membrane souple qui soit apte à entrer dans la constitution de structures à déploiement par gonflage, et à être rigidifiée en réponse à une irradiation autre qu'ultraviolette.

Les Inventeurs se sont aussi fixés pour but que cette polymérisation puisse être initiée par un photoinitiateur ne nécessitant pas d'être associé à un photosensibilisateur, et que la polymérisation soit de nature ionique plutôt que radicalaire de sorte qu'il soit possible de contrôler indépendamment l'initiation de la polymérisation et la polymérisation elle-même, et que la polymérisation, une fois initiée, puisse se poursuivre en l'absence d'irradiation.

Les Inventeurs se sont de plus fixés pour but que cette polymérisation puisse être initiée dans des conditions analogues à celles qui règnent dans un environnement spatial (c'est-à-dire, sous vide ou sous une très faible pesanteur et à des températures allant de -150°C à +200°C), en utilisant un système d'irradiation le plus léger et le petit possible, et avec la même efficacité quel que soit le laps de temps s'étant écoulé depuis la fabrication de la membrane, de sorte à ce que cette membrane convienne parfaitement à des structures à déploiement par gonflage à usage spatial.

Les Inventeurs se sont encore fixés pour but que la polymérisation de la résine s'accompagne d'un phénomène de blanchiment (ou "bleaching" en langue anglaise) du photoinitiateur après photolyse, de sorte à garantir une polymérisation de la résine sur la totalité de l'épaisseur qu'elle occupe dans la membrane, et, par voie de conséquence, une optimisation des propriétés mécaniques de la membrane, une fois cette polymérisation achevée.

### EXPOSÉ DE L'INVENTION

Ces buts, et d'autres encore, sont atteints par l'invention qui a, en premier lieu, pour objet une membrane souple pour structure à déploiement par gonflage, laquelle membrane comprend au moins une couche d'un composite et au moins un film polymère perméable à la lumière visible qui recouvre l'une des faces de cette couche, ledit composite étant formé d'un matériau fibreux imprégné d'une composition renfermant une résine époxyde ou époxy-acrylate et un photoinitiateur, et est caractérisée en ce que le photoinitiateur est choisi parmi les sels de complexes fer-arène de formule générale (I) ci-après : 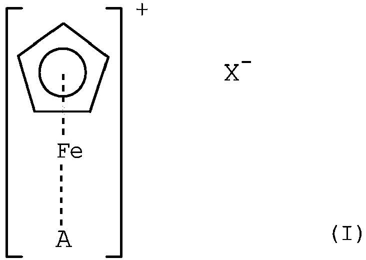 dans laquelle A représente un groupe arène, tandis que X représente un anion non nucléophile.

L'utilisation de sels de complexes fer-arène pour initier la polymérisation d'une résine époxyde ou époxy-acrylate n'est pas nouvelle en soi. Elle a notamment été proposée dans le brevet américain n° 5,047,376 **[3]** pour la réalisation de matériaux de revêtement, de peintures et d'adhésifs, ainsi que pour l'encapsulation de composants électroniques.

Ce qui, par contre, est totalement nouveau et inattendu, est le fait que, d'une part, ces sels soient capables d'initier la polymérisation d'une résine de type époxyde ou époxy-acrylate en réponse à une lumière visible qui ne leur est pas appliquée directement mais à travers un film polymère intercalé entre la composition dans laquelle ils se trouvent et la source émettrice de cette lumière visible, et que, d'autre part, leur utilisation en tant que photoinitiateurs soit parfaitement adaptée à la rigidification d'une membrane destinée à entrer dans la constitution d'une structure Gossamer.

Dans la formule générale (I) ci-avant, le groupe arène peut être tout groupe hydrocarboné aromatique mono- ou polycyclique comportant de 6 à 32 atomes de carbone et, de préférence, de 6 à 12 atomes de carbone, dans le noyau aromatique, ce groupe hydrocarboné pouvant porter un ou plusieurs substituants identiques ou différents, choisis parmi les atomes d'halogène et les groupes alkyle, alcoxyle, halogénoalkyle, nitroalkyle, cyanoalkyle et alcoxycarbonyle, linéaires ou ramifiés.

A titre d'exemples d'un tel groupe arène, on peut citer le benzène, le cumène, le naphtalène, le méthylnaphtalène, le phénanthrène, le fluorène, le coronène et l'ovalène.

L'anion non nucléophile peut être, lui, un anion halogéné ou chloré d'un élément choisi parmi le bore, le phosphore, l'arsenic, l'antimoine, le fer et le bismuth comme, par exemple, BF₄-, PF₆-, AsF₆-, SbF₆-, SbCl₆-, FeCl₄-, BiCl₆-, ou bien un anion d'un acide sulfonique fluoroaliphatique ou perfluroaromatique comme, par exemple, CF₃SO₃-, C₃F₇SO₃-, C₄F₉SO₃-, C₆F₁₃SO₃- ou encore C₆F₅SO₃-.

Parmi les sels de complexes de fer-arène de formule générale (I), on préfère notamment l'hexa-fluorophosphate de cyclopentadiényl 1-méthyl-naphtalène ferrocénium qui répond à la formule particulière (II) ci-après : 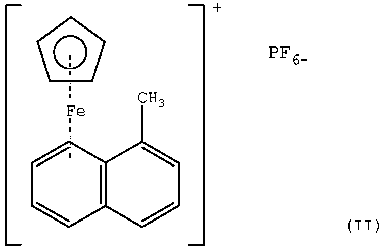 ce composé s'étant, en effet révélé, présenter des propriétés particulièrement intéressantes, en particulier en termes de sensibilité à la lumière visible, même lorsque celle-ci lui est appliquée à travers un film polymère, et de stabilité à la chaleur.

Les sels de complexes de fer-arène de formule générale (I) peuvent notamment être obtenus par substitution d'un anion cyclopentadiényle du ferrocène par le groupe arène, en présence d'une poudre d'aluminium et de chlorure d'aluminium, comme décrit par Nesmeyanov et al., Dokl. Akad. Nauk., SSSR 1965, 166, 607 **[4].**

Conformément à l'invention, le photoinitiateur représente, de préférence, de 0,1% à 10% en masse de la masse de la résine, et mieux encore de 0,2 à 5% en masse de la masse de la résine.

Le matériau fibreux entrant dans la constitution du composite peut être tout matériau constitué de fibres classiquement utilisées comme fibres de renfort comme, par exemple, un matériau en fibres de verre, en fibres de silice, en fibres de quartz, en fibres de carbone, en fibres métalliques comme des fibres d'acier, des fibres d'aluminium ou des fibres de bore, en fibres organiques comme les fibres aramides, les fibres de polyéthylène, les fibres de polyester ou les fibres de polybenzoxazole (BPO), en fibres de carbure de silicium, ou encore un matériau constitué d'un mélange de telles fibres.

Ce matériau fibreux peut se présenter, selon la nature des fibres qui le constituent, sous la forme de fils coupés, de fibres broyées, de mats à filaments continus, de mats à filaments coupés, de stratifils (ou "rovings" en langue anglaise), de tissus, de tricots, de feutres, etc, ou encore sous la forme de complexes réalisés par association de différents types de matériaux plans.

Le matériau fibreux est, de préférence, constitué de fibres de carbone, de fibres de verre (par exemple, un taffetas de verre E, de 125 g/m², tel que commercialisé par la société PORCHER INDUSTRIES sous la référence 3365-1270-977C1) ou d'un mélange de ces fibres.

Quant à la résine qui imprègne ce matériau fibreux, elle est, de préférence, une résine dérivée du bisphénol A, et notamment une résine diglycidyl éther de bisphénol A (ou résine DGEBA) comme celles commercialisées par la société DOW PLASTICS sous les références DER® 330 et DER® 332, ou un dérivé acrylique multifonctionnel d'une telle résine.

En variante, cette résine peut également être choisie parmi les résines époxycycloaliphatiques, les résines époxynovolaques et les résines issues de mélanges de ces résines entre elles ou de ces résines avec une résine DGEBA.

Conformément à l'invention, le film polymère perméable à la lumière visible peut former la face interne de la membrane, tandis que l'autre face de la couche de composite est recouverte d'une couverture thermique qui forme la face externe de cette membrane.

En variante, la couche de composite peut être intercalée entre deux films polymères perméables à la lumière visible, identiques ou différents, auquel cas l'un de ces films polymères forme la face interne de la membrane, tandis que l'autre de ces films est recouvert d'une couverture thermique qui forme la face externe de cette membrane.

Dans tous les cas, le ou les films polymères perméables à la lumière visible sont, de préférence, un ou des films d'un polyimide aromatique, d'un poly(arylène éther benzimidazole) ou d'un poly(benzoxazole), les films en polyimide aromatique comme ceux commercialisés par la société DUPONT sous la marque Kapton® et par la société UBE INDUSTRIES sous la marque Upilex®, étant particulièrement préférés. Ce ou ces films polymères ont, par exemple, une épaisseur de 25 à 150 microns.

La couverture thermique a pour fonction de protéger la membrane contre les températures extrêmes régnant dans un environnement spatial et à maintenir sa température interne dans une gamme relativement limitée, typiquement entre -50 et +110°C.

Selon l'usage auquel est destinée la membrane, cette couverture thermique peut être plus ou moins complexe. Ainsi, elle peut notamment être constituée d'une couche ou d'une série de couches d'un matériau présentant à la fois des propriétés barrières aux radiations et une faible émissivité infrarouge (polyester Mylar®, polyimide aromatique Kapton®, ...), ces couches pouvant être revêtues sur l'une ou leurs deux faces d'un métal (aluminium, argent, or, oxyde d'étain et d'indium, ...) et être séparées les unes des autres par une ou plusieurs couches d'un matériau à faible conductivité thermique comme du tulle de Dacron®.

La membrane souple selon l'invention est remarquable notamment en ce qu'elle est susceptible d'être rigidifiée par un mécanisme de polymérisation cationique de la résine qu'elle renferme et en ce que cette polymérisation peut être initiée sous l'effet de l'application d'une lumière visible et être activée par la chaleur, cette activation pouvant être réalisée conjointement avec l'initiation ou de manière différée. Il est ainsi possible de contrôler si on le souhaite l'initiation de la polymérisation de la résine indépendamment de la polymérisation proprement dite.

En outre, cette polymérisation s'étend sur toute l'épaisseur occupée par la résine dans la membrane du fait que les sels de complexes fer-arène de formule (I) blanchissent après photolyse.

Aussi, l'invention a-t-elle également pour objet un procédé de rigidification d'une membrane souple telle que précédemment définie, ce procédé étant caractérisé en ce qu'il comprend :
a) l'irradiation de la membrane par une lumière visible au travers dudit au moins un film polymère perméable à la lumière visible pour initier la polymérisation de la résine présente dans cette membrane, et
b) le chauffage de la membrane pour activer la polymérisation de ladite résine,
et en ce que le chauffage de la membrane peut être effectué simultanément ou postérieurement à son irradiation.

Conformément à l'invention, la membrane souple peut être irradiée aussi bien avec une lumière monochromatique que polychromatique pour autant que le rayonnement incident se situe dans une partie du domaine d'absorption de l'initiateur correspondant à des longueurs d'onde non filtrées par les constituants de la membrane qu'il traverse.

Dans tous les cas, la durée de l'irradiation est choisie en fonction notamment des dimensions de la membrane devant être rigidifiée et du nombre et de la puissance des sources lumineuses utilisées, sachant que cette durée peut aller de plusieurs dizaines de minutes à plusieurs dizaines d'heures, voire davantage.

De manière similaire, la durée du chauffage peut également aller de plusieurs dizaines de minutes à plusieurs dizaines d'heures ou plus selon les dimensions de la membrane à rigidifier, du système de chauffage utilisé et, surtout, de la température de chauffage choisie, sachant que la membrane est, de préférence, chauffée à une température au moins égale à 50°C mais ne dépassant pas 120°C.

Selon un mode de mise en oeuvre préféré du procédé selon l'invention, le chauffage de la membrane est effectué postérieurement à l'irradiation de cette membrane, auquel cas la membrane peut aussi bien être chauffée immédiatement après la fin de l'irradiation que de manière différée.

La membrane souple selon l'invention est particulièrement bien adaptée à entrer dans la constitution de structures à déploiement par gonflage à usage spatial, et notamment de structures du type de celle illustrée sur la figure 1 jointe en annexe, à ceci près que la lampe à ultraviolets 6 montrée sur cette figure devra être remplacée par une ou plusieurs sources émettrices d'une lumière visible, mono- ou polychromatique.

Ainsi, par exemple, dans la mesure où, dans le cadre d'une application spatiale, il est souhaitable d'utiliser des sources de lumière à la fois très légères et de faible puissance, la ou les sources de lumière visible pourront être des diodes électroluminescentes (ou "Light-Emitting Diodes" en langue anglaise).

Le chauffage de la membrane souple pourra être, lui, assuré soit par un dispositif de chauffage intégré dans la structure et activable sur commande, soit par la température susceptible d'exister naturellement dans la structure lorsque celle-ci se trouvera exposée au soleil, notamment s'il s'agit d'une structure déployable faisant partie d'un dispositif orbital.

L'invention a donc encore pour objet l'utilisation d'une membrane souple telle que précédemment définie dans une structure à déploiement par gonflage, ainsi que l'application du procédé de rigidification de cette membrane tel que précédemment défini à la rigidification d'une structure à déploiement par gonflage.

L'invention sera mieux comprise à la lumière du complément de description qui suit, qui se rapporte à des exemples illustrant les caractéristiques physico-chimiques de deux sels de complexes fer-arène de formule (I) ci-avant ainsi que l'intérêt d'utiliser ces sels comme photoinitiateurs dans la rigidification d'une structure Gossamer par polymérisation d'une résine époxyde.

Bien entendu, ce complément est donné à titre d'illustration de l'invention et n'en constitue en aucune manière une limitation.

### BRÈVE DESCRIPTION DES DESSINS

La figure 1, déjà commentée, illustre schématiquement le type de construction actuellement retenu pour une structure tubulaire à déploiement par gonflage, destinée à être rigidifiée par polymérisation induite par les ultraviolets.
La figure 2 représente les spectres d'absorption UV-visible d'un premier photoinitiateur de formule générale (I) à une concentration de 0,2% m/v dans l'acétonitrile et dans le tétrahydrofurane (courbe A), ainsi que dans le dichlorométhane (courbe B).
La figure 3 représente les spectres d'absorption UV-visible d'un deuxième photoinitiateur de formule générale (I) à des concentrations de 0,06% m/v (courbe A), de 0,1% m/v (courbe B) et de 0,2% m/v (courbe C) dans l'acétonitrile.
La figure 4 illustre l'évolution du spectre d'absorption UV-visible d'un film mince d'une résine époxyde additionnée du premier photoinitiateur de formule (I) à une concentration de 2% m/m lorsqu'on applique à ce film des irradiations visibles de durée croissante sans intercaler de film polymère entre ce film et la source de lumière visible.
La figure 5 illustre l'évolution du spectre d'absorption UV-visible d'un film mince d'une résine époxyde additionnée du premier photoinitiateur de formule (I) à une concentration de 2% m/m lorsqu'on applique à ce film des irradiations visibles de durée croissante à travers un film polymère.
La figure 6 illustre l'évolution du spectre d'absorption UV-visible d'un film mince d'une résine époxyde additionnée du deuxième photoinitiateur de formule (I) à une concentration de 2% m/m lorsqu'on applique à ce film des irradiations visibles de durée croissante sans intercaler de film polymère entre ce film et la source de lumière visible.
La figure 7 illustre l'évolution du spectre d'absorption UV-visible d'un film mince d'une résine époxyde additionnée du deuxième photoinitiateur de formule (I) à une concentration de 2% m/m lorsqu'on applique à ce film des irradiations visibles de durée croissante à travers un film polymère.

### EXPOSÉ DÉTAILLÉ DE MODES DE RÉALISATION PARTICULIERS

Les exemples qui suivent ont été réalisés en utilisant deux sels de complexe fer-arène différents comme photoinitiateurs, à savoir :
* d'une part, l'hexafluorophosphate de cyclopentadiényl cumène ferrocénium, ci-après dénommé "photoinitiateur **1"** et qui répond à la formule générale (I) dans laquelle A est un groupe cumène et X représente PF₆ ; et
* d'autre part, l'hexafluorophosphate de cyclopentadiényl 1-méthylnaphtalène ferrocénium, ci-après dénommé "photoinitiateur **2"** et qui répond à la formule particulière (II).

Le photoinitiateur **1** a été obtenu auprès de la société CIBA-GEIGY (référence commerciale : Irgacure 261), tandis que le photoinitiateur **2** a été synthétisé par substitution d'un anion cyclopentadiényle du ferrocène par un groupe 1-méthylnaphtalène en présence d'une poudre d'aluminium et de chlorure d'aluminium selon le mode opératoire suivant.

On prépare dans un ballon à fond rond, muni d'une tubulure latérale, d'une ampoule à coulée et d'un barreau aimanté, un mélange composé de 3,75 g de ferrocène (ALDRICH PRODUCT, référence F408), de 0,75 g d'une poudre d'aluminium (ALDRICH PRODUCT, référence 21,475-2) et de chlorure d'aluminium. On purge trois fois avec de l'argon, puis on ajoute au mélange, sous agitation, 80 mL de 1-méthylnaphtalène saturé d'argon et 0,36 mL d'eau saturée d'argon et le tout est mis au reflux pendant 2 heures sous argon.

On ajoute le mélange résultant à 150 mL d'un mélange de glace et d'eau, toujours sous agitation. On transfère la plus grande quantité possible de solide obtenu dans un erlenmeyer, que l'on concasse avec une baguette en verre et on transfère le mélange résultant dans une ampoule à décanter. On sépare la phase aqueuse de la phase organique. On ajoute à la phase aqueuse 0,39 g d'acide ascorbique pour réduire les ions ferricinium [Fe(Cp)₂]⁺ en ferrocène, puis on l'extrait par 3 x 75 mL d'hexane pour éliminer le ferrocène et on la filtre sous aspiration pour éliminer l'aluminium résiduel.

On prépare une solution de 3 g de NH₄PF₆ dans 15 mL d'eau que l'on ajoute au filtrat sous agitation pour obtenir un précipité correspondant au sel brut. On maintient l'agitation pendant 3 minutes. Si la liqueur mère reste fortement colorée, brun foncé, on rajoute du NH₄PF₆ et on maintient l'agitation pendant encore 10 minutes au terme desquelles on filtre le sel brut sous aspiration. On purifie ce dernier en le passant, après l'avoir dissous dans du dichlorométhane, sur une colonne d'alumine entourée de papier aluminium pour limiter l'exposition à la lumière. On réduit le volume de la solution éluée à 3 mL et on fait précipiter le sel purifié avec 10 mL d'éther diéthylique. Après séchage du précipité sous vide, on obtient le photoinitiateur **2** sous la forme d'une poudre rouge orangé (Rdt : 30-50% selon les lots synthétisés).

### EXEMPLE 1 : Caractéristiques physico-chimiques des photoinitiateurs 1 et 2

### a) Formules chimiques et masses moléculaires :

Les formules chimiques brutes et les masses moléculaires des photoinitiateurs **1** et **2** sont les suivantes :
   photoinitiateur **1** : C₁₄H₁₇FePF₆, soit une masse moléculaire de 385,85
   photoinitiateur **2** : C₁₆H₁₅FePF₆, soit une masse moléculaire de 407,85

### b) Spectres d'absorption UV-visible :

Les spectres d'absorption UV-visible des photoinitiateurs **1** et **2** ont été enregistrés à partir de solutions de ces composés dans trois solvants différents (dichlorométhane, tétrahydrofurane et acétonitrile), en utilisant une cuve en quartz Suprasil® d'un trajet optique de 1 cm dans un spectromètre VARIAN Cary 50 Scan.

Pour chaque solvant, trois concentrations différentes en photoinitiateur (0,06% m/v, 0,1 m/v et 0,2 m/v) ont été testées.

La figure 2 représente les spectres tels qu'obtenus pour le photoinitiateur **1** en solution à la même concentration (0,2% m/v) dans les trois solvants testés, la courbe A correspondant aux solutions dans l'acétonitrile et dans le tétrahydrofurane, et la courbe B correspondant à la solution dans le dichlorométhane, tandis que la figure 3 représente les spectres obtenus pour le photoinitiateur **2** en solution dans le même solvant (l'acétonitrile) aux trois concentrations testées. Sur cette figure, la courbe A correspond à la concentration de 0,06% m/v, la courbe B correspond à la concentration de 0,1% m/v et la courbe C correspond à la concentration de 0,2% m/v.

La figure 2 montre que les spectres d'absorption UV-visible du photoinitiateur **1** sont quasiment identiques dans les trois solvants testés. Ces spectres se caractérisent par l'existence de deux bandes dans le spectre visible avec deux maxima d'absorption qui sont situés respectivement à 388 nm et 455 nm et une absorption qui s'étend jusqu'à 550 nm.

La figure 3 montre, elle, que si les spectres d'absorption UV-visible du photoinitiateur **2** diffèrent d'une concentration en photoinitiateur à l'autre par les valeurs d'absorbance obtenues, ces spectres montrent dans tous les cas une seule bande d'absorption dans le visible avec un maximum d'absorption à 480 nm.

Le spectre d'absorption du photoinitiateur **2** est donc décalé vers le rouge par rapport à celui du photoinitiateur **1.**

Le coefficient d'absorption molaire du photoinitiateur **1** à 455 nm (ε_{455 nm}) dans l'acétonitrile est égal à 54 L.mol⁻¹.cm⁻¹, tandis que celui du photoinitiateur **2** à 480 nm (ε_{480 nm}) dans ce même solvant est égal à 198 L.mol⁻¹.cm⁻¹.

### EXEMPLE 2 : Photolyse sous irradiation visible des photoinitiateurs 1 et 2 dans des résines époxydes :

En présence de fonctions époxydes, la photolyse des sels de complexe fer-arène se traduit par une substitution du groupe arène de ces sels par trois molécules d'époxyde conduisant à la formation d'une espèce active qui induit la polymérisation cationique des molécules d'époxyde.

Le schéma réactionnel ci-dessous illustre ce mécanisme en prenant le photoinitiateur **1** comme exemple de sel de complexe fer-arène.

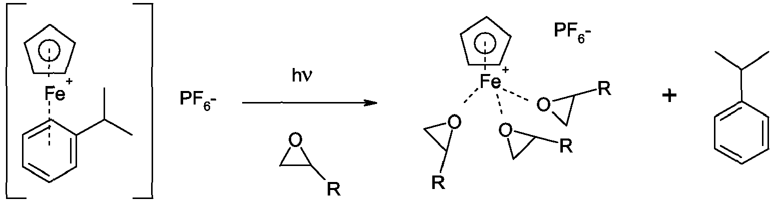

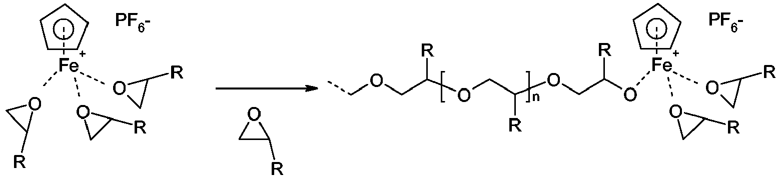

L'espèce active, qui n'est plus liée qu'à un seul noyau aromatique, à savoir le groupe cyclopentadiényle, n'absorbe plus dans le domaine visible.

Il en résulte un phénomène de blanchiment du sel de complexe fer-arène après photolyse.

La photolyse sous irradiation visible des photoinitiateurs **1** et **2** dans les résines époxydes a été étudiée en soumettant des films minces d'une résine époxyde (résine DER® 332 de DOW PLASTICS), additionnée de 2% m/m de l'un de ces photoinitiateurs, à des irradiations visibles de durée croissante et en suivant l'évolution des spectres d'absorption UV-visible de ces films en fonction de la durée de ces irradiations.

Les films minces de résine ont été réalisés en dissolvant les photoinitiateurs **1** et **2** dans la résine époxyde et en déposant une partie aliquote des solutions ainsi obtenues entre deux lamelles de verre de 150 µm d'épaisseur que l'on a ensuite assemblées entre elles par un adhésif double face.

Les irradiations visibles ont été appliquées aux échantillons ainsi préparés en utilisant un rétroprojecteur LIESElANG équipé d'une ampoule Xenophot de 250 W. Les échantillons ont été déposés soit directement sur le plan en verre du rétroprojecteur, soit sur un film d'un polyimide aromatique (Kapton® 100 HN de DUPONT) de 50 µm d'épaisseur recouvrant le plan en verre afin d'apprécier l'influence de ce film sur la photolyse des photoinitiateurs **1** et **2.**

Les spectres d'absorption UV-visible des films ont été enregistrés au moyen d'un spectromètre VARIAN Cary 50 Scan.

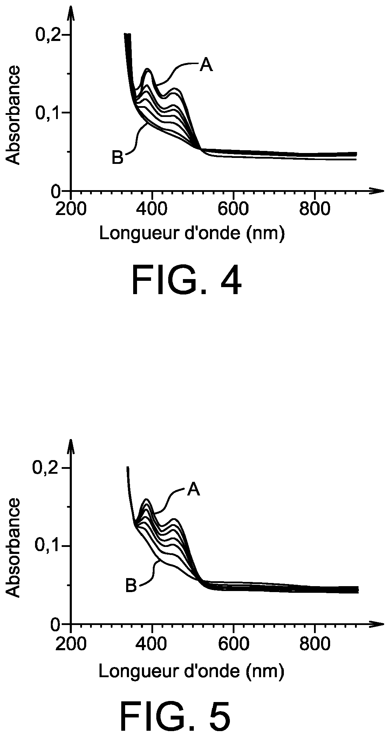

Les figures 4 et 5 illustrent l'évolution des spectres d'absorption UV-visible de deux films minces de résine époxyde additionnée du photoinitiateur **1,** la figure 4 correspondant aux spectres obtenus après les irradiations sans film de polyimide et la figure 5 correspondant aux spectres obtenus après les irradiations effectuées au travers du film de polyimide.

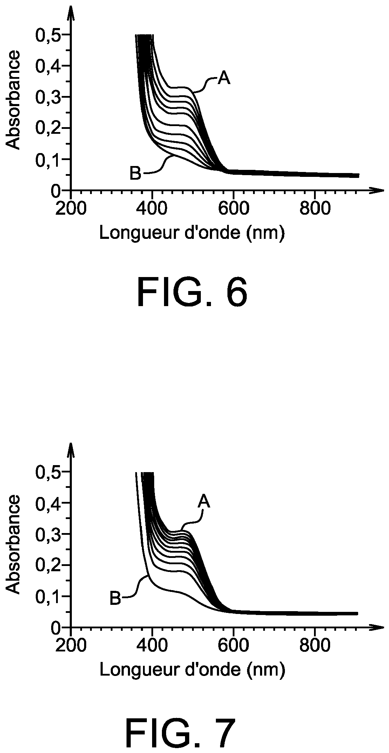

De manière similaire, les figures 6 et 7 illustrent l'évolution des spectres d'absorption UV-visible de deux films minces de résine époxyde additionnée du photoinitiateur **2,** la figure 6 correspondant aux spectres obtenus après les irradiations sans film de polyimide, et la figure 7 correspondant aux spectres obtenus après les irradiations effectuées au travers du film de polyimide.

Sur ces figures, les spectres présentant les valeurs d'absorbance les plus élevées sont ceux obtenus avant que les films ne soient soumis à une irradiation (courbe A), tandis que ceux présentant les valeurs d'absorbance les plus faibles sont ceux obtenus après l'irradiation la plus longue (courbe B), à savoir une irradiation de 2640 secondes pour la figure 4, 5040 secondes pour la figure 5, 930 secondes pour la figure 6 et 1530 secondes pour la figure 7.

Ces figures montrent :
- que la photolyse des photoinitiateurs **1** et **2** conduit bien à une diminution de leur absorption dans le domaine visible et donc à un phénomène de blanchiment de ces photoinitiateurs ;
- qu'une photolyse quasi-complète du photoinitiateur **2** est obtenue après moins de 1000 secondes d'irradiation directe alors que celle du photoinitiateur **1** nécessite une irradiation directe plus longue, de 2640 secondes ;
- que la présence d'un film de polyimide aromatique entre les films de résine contenant les photoinitiateurs **1** et **2** et la source émettrice de lumière visible allonge le temps d'irradiation nécessaire pour obtenir le même degré de photolyse de ces photoinitiateurs que celui obtenu en l'absence d'un tel film ; mais
- que la présence de ce film est moins pénalisante dans le cas du photoinitiateur **2** que dans celui du photoinitiateur **1.**

### EXEMPLE 3 : Induction et activation de la polymérisation de résines époxydes comprenant le photoinitiateur 2 :

L'induction et l'activation de la polymérisation de résines époxydes comprenant le photoinitiateur **2** ont été étudiées par les deux séries de tests suivantes :
* une première série consistant à soumettre des films minces d'une résine époxyde (DER® 330 de DOW CHEMICALS), additionnée de 2% m/m de photoinitiateur **2,** à une irradiation visible de 15 ou 30 minutes sans intercaler de film de polyimide aromatique entre ces films et la source de lumière visible, à maintenir ensuite les films à 22°C, 50°C, 70°C, 90°C ou 110°C pendant 10 ou 40 minutes, et à déterminer le taux de conversion π des fonctions époxydes de la résine respectivement au terme de l'irradiation et au terme du traitement thermique ; et
* une deuxième série consistant à soumettre des films de cette même résine, additionnée de 0,5%, 1%, 2% et 4% m/m de photoinitiateur **2,** à une irradiation visible de 30 minutes à travers un film de polyimide aromatique, à les maintenir ensuite à 70°C pendant 10 ou 40 minutes, et à déterminer le taux de conversion π des fonctions époxydes de la résine respectivement au terme de l'irradiation et au terme du traitement thermique.

Les films minces de résine ont été réalisés en dissolvant le photoinitiateur **2** dans la résine et en déposant une partie aliquote des solutions obtenues entre deux films de polyéthylène de 40 µm d'épaisseur chacun, de sorte à isoler la résine du milieu ambiant dans une géométrie bien contrôlée et sans risque de contamination, ni d'inhibition, compte tenu du caractère inerte et hydrophobe du polyéthylène.

Les irradiations visibles ont été appliquées aux échantillons ainsi obtenus soit à température ambiante en utilisant une ampoule Xenophot de 250 W, soit à une température d'environ 40°C en utilisant une platine thermorégulée LINKAM LTS350E. Ces deux modes d'irradiation sont respectivement désignés dans ce qui suit "OPH1" et "OPH2".

Pour les irradiations à travers le film de polyimide aromatique, un film de Kapton® 100 HN de 50 µm d'épaisseur a été préalablement intercalé entre la source de lumière visible et les échantillons.

La conversion des fonctions époxydes a été appréciée par spectroscopie infrarouge à tranformé de Fourier en utilisant un spectromètre PERKIN ELMER IRTF 2000 et en exploitant les spectres infrarouges obtenus comme décrit par Degrand et al., Radiation Physics and Chemistry, 2003, 68, iss. 5, 885-891(7) **[5].**

Les tableaux 1 et 2 ci-après présentent les taux de conversion π obtenus dans respectivement la première et la deuxième série de tests. Dans chacun de ces tableaux, sont indiqués dans la colonne "π après irradiation", entre parenthèses, le rétroprojecteur utilisé et la durée de l'irradiation visible appliquée.

**TABLEAU 1**

| T(°C) du traitement thermique | π après irradiation | π après traitement thermique de 10 min | π après traitement thermique de 40 min |
|---|---|---|---|
| 22 | 0,13(OHP1-30 min) | 0,08 | 0,08 |
| 50 | 0,22 (OHP2-15 min) | 0,32 | 0,44 |
| 70 | 0,28 (OHP2-30 min) | 0,41 | 0,50 |
| 90 | 0,26 (OHP2-30 min) | 0,52 | 0,58 |
| 110 | 0,13 (OHP1-30 min) | 0,60 | 0,67 |

**TABLEAU 2**

| Concentration en photoinitiateur **2** (% m/m) | π après irradiation | π après traitement thermique de 10 min | π après traitement thermique de 40 min |
|---|---|---|---|
| 0,5 | 0,13 (OHP1-30 min) | 0,25 | 0,29 |
| 1 | 0,17 (OHP1-30 min) | 0,43 | 0,47 |
| 2 | 0,11 (OHP1-30 min) | 0,45 | 0,52 |
| 4 | 0,10 (OHP1-30 min) | 0,37 | 0,56 |

Ces tableaux montrent :
- que la lumière visible seule, dont on sait qu'elle induit une photolyse des photoinitiateurs **1** et **2,** n'induit pratiquement pas de polymérisation de la résine époxyde et ce, qu'un film de polyimide soit intercalé ou non entre cette résine et la source de lumière visible ;
- que, par contre, la chaleur a un effet favorable sur la conversion des fonctions époxydes, cette conversion dépassant 65% dans le cas d'un traitement thermique à 110°C de 40 minutes ;
- que la durée de l'exposition à la lumière visible influence non seulement la vitesse initiale de polymérisation de la résine, mais également le niveau final de cette polymérisation ; ainsi, la température apparaît n'être pas le seul facteur contrôlant la conversion des fonctions époxydes si le degré d'avancement de la photolyse n'est pas porté à son maximum ;
- que la chaleur, si elle est appliquée conjointement à l'exposition à la lumière visible, induit un démarrage de la polymérisation dès l'étape de photolyse des photoinitiateurs ;
- qu'une augmentation de la concentration de la résine en photoinitiateur apparaît avoir peu d'influence sur le taux de conversion des fonctions époxydes dans le cas où l'irradiation visible est appliquée sans chaleur conjointe, mais que, par contre, elle influence de manière importante la vitesse et le niveau final de la polymérisation de la résine lorsque l'irradiation est suivie d'un traitement thermique à 70°C.

### REFERENCES CITEES

**[1]** US-A-5,044,579
**[2]** US-A-5,660,644
**[3]** US-A-5,047,376
**[4]** Nesmeyanov et al., Dokl. Akad. Nauk., SSSR 1965, 166, 607
**[5]** Degrand et al., Radiation Physics and Chemistry, 2003, 68, iss. 5, 885-891(7)

## Revendications

1. Membrane souple pour structure à déploiement par gonflage, qui comprend au moins une couche d'un composite et au moins un film polymère perméable à la lumière visible qui recouvre l'une des faces de cette couche, ledit composite étant formé d'un matériau fibreux imprégné d'une composition renfermant une résine époxyde ou époxy-acrylate et un photoinitiateur, **caractérisée en ce que** le photoinitiateur est choisi parmi les sels de complexes fer-arène de formule générale (I) ci-après : 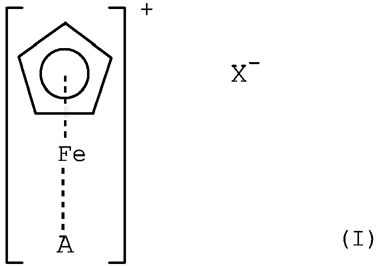 dans laquelle A représente un groupe arène, tandis que X représente un anion non nucléophile.

2. Membrane selon la revendication 1, **caractérisée en ce que** le photoinitiateur est choisi parmi les sels de complexes de fer-arène de formule générale (I) dans laquelle le groupe arène est un groupe aromatique mono- ou polycyclique comportant de 6 à 32 atomes de carbone, et de préférence de 6 à 12 atomes de carbone, dans le noyau aromatique, ce groupe étant éventuellement substitué par un ou plusieurs groupes choisis, indépendamment les uns des autres, parmi les atomes d'halogène et les groupes alkyle, alcoxyle, halogénoalkyle, nitroalkyle, cyanoalkyle et alcoxycarbonyle, linéaires ou ramifiés.

3. Membrane selon la revendication 2, **caractérisée en ce que** le photoinitiateur est choisi parmi les sels de complexes de fer-arène de formule générale (I) dans laquelle le groupe arène est choisi parmi les groupes benzène, cumène, naphtalène, méthyl-naphtalène, phénanthrène, fluorène, coronène et ovalène.

4. Membrane selon l'une quelconque des revendications précédentes, **caractérisée en ce que** le photoinitiateur est choisi parmi les sels de complexes de fer-arène de formule générale (I) dans laquelle l'anion non nucléophile est un anion halogéné ou chloré d'un élément choisi parmi le bore, le phosphore, l'arsenic, l'antimoine, le fer et le bismuth, ou un anion d'un acide sulfonique fluoroaliphatique ou perfluroaromatique.

5. Membrane selon l'une quelconque des revendications précédentes, **caractérisée en ce que** le photoinitiateur est l'hexafluorophosphate de cyclopentadiényl 1-méthyl-naphtalène ferrocénium.

6. Membrane selon l'une quelconque des revendications précédentes, **caractérisée en ce que** le photoinitiateur représente de 0,1% à 10% en masse de la masse de la résine.

7. Membrane selon la revendication 6, **caractérisée en ce que** le photoinitiateur représente de 0,2 à 5% en masse de la masse de la résine.

8. Membrane selon l'une quelconque des revendications précédentes, **caractérisée en ce que** le matériau fibreux est un matériau constitué de fibres de carbone, de fibres de verre ou d'un mélange de ces fibres.

9. Membrane selon l'une quelconque des revendications précédentes, **caractérisée** en ce la résine est une résine diglycidyl éther de bisphénol A (DGEBA) ou un dérivé acrylé multifonctionnel d'une telle résine.

10. Membrane selon l'une quelconque des revendications précédentes, **caractérisée en ce que** le film polymère perméable à la lumière visible forme la face interne de la membrane, tandis que l'autre face de la couche de composite est recouverte d'une couverture thermique qui forme la face externe de cette membrane.

11. Membrane selon l'une quelconque des revendications 1 à 9, **caractérisée en ce que** la couche de composite est intercalée entre deux films polymères perméables à la lumière visible, identiques ou différents.

12. Membrane selon la revendication 11, **caractérisée en ce que** l'un des films polymères forme la face interne de la membrane, tandis que l'autre de ces films est recouvert d'une couverture thermique qui forme la face externe de cette membrane.

13. Membrane selon l'une quelconque des revendications précédentes, **caractérisée en ce que** le ou les films polymères perméables à la lumière visible sont un ou des films d'un polyimide aromatique, d'un poly(arylène éther benzimidazole) ou d'un polybenzoxazole.

14. Membrane selon la revendication 13, **caractérisée en ce que** le ou les films polymères perméables à la lumière visible sont un ou des films de polyimide aromatique.

15. Procédé de rigidification d'une membrane souple telle que définie dans l'une quelconque des revendications 1 à 14, caractérisé en ce en ce qu'il comprend :
a) l'irradiation de la membrane par une lumière visible au travers dudit au moins un film polymère perméable à la lumière visible pour initier la polymérisation de la résine présente dans cette membrane, et
b) le chauffage de la membrane pour activer la polymérisation de ladite résine,
et en ce que le chauffage de la membrane peut être effectué simultanément ou postérieurement à son irradiation.

16. Procédé selon la revendication 15, **caractérisé en ce que** le chauffage de la membrane est effectué postérieurement à son irradiation.

17. Utilisation d'une membrane souple telle que définie dans l'une quelconque des revendications 1 à 14 dans une structure à déploiement par gonflage.

18. Application d'un procédé selon la revendication 15 ou la revendication 16 à la rigidification d'une structure à déploiement par gonflage.

## Patentansprüche

1. Flexible Membran für eine Struktur zum Einsatz durch Aufblasen, die mindestens eine Schicht aus einem Verbundstoff und mindestens einen für sichtbare Strahlung durchlässigen Polymerfilm umfasst, der eine der Seiten dieser Schicht bedeckt, wobei der Verbundstoff aus einem Fasermaterial gebildet ist, das mit einer Zusammensetzung imprägniert ist, die ein Epoxid- oder Epoxyacrylatharz und einen Photoinitiator beinhaltet, **dadurch gekennzeichnet, dass** der Photoinitiator ausgewählt ist aus den Salzen von Eisen-Aren-Komplexen der folgenden allgemeinen Formel (I): 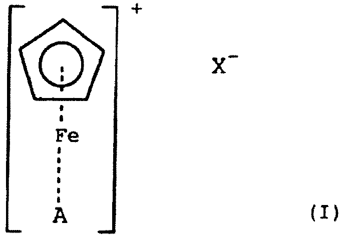 wobei A für eine Arengruppe steht, während X für ein nicht nukleophiles Anion steht.

2. Membran nach Anspruch 1, **dadurch gekennzeichnet, dass** der Photoinitiator ausgewählt ist aus Salzen von Eisen-Aren-Komplexen der allgemeinen Formel (I), wobei die Arengruppe eine aromatische monocyclische oder polycyclische Gruppe mit 6 bis 32 Kohlenstoffatomen und vorzugsweise 6 bis 12 Kohlenstoffatomen in dem aromatischen Ring ist, wobei diese Gruppe gegebenenfalls durch eine oder mehrere Gruppen, unabhängig voneinander ausgewählt aus Halogenatomen und linearen oder verzweigten Alkyl-, Alkoxyl-, Halogenalkyl-, Nitroalkyl-, Cyanoalkyl- und Alkoxycarbonylgruppen, substituiert ist.

3. Membran nach Anspruch 2, **dadurch gekennzeichnet, dass** der Photoinitiator ausgewählt ist aus den Salzen von Eisen-Aren-Komplexen der allgemeinen Formel (I), wobei die Arengruppe ausgewählt ist aus Benzol-, Cumol-, Naphthalin-, Methylnaphthalin-, Phenanthren-, Fluoren-, Coronen- und Ovalengruppen.

4. Membran nach einem der vorhergehenden Ansprüche, **dadurch gekennzeichnet, dass** der Photoinitiator ausgewählt ist aus den Salzen von Eisen-Aren-Komplexen der allgemeinen Formel (I), wobei das nicht nukleophile Anion ein Halogen- oder Chloranion eines Elements, ausgewählt aus Bor, Phosphor, Arsen, Antimon, Eisen und Wismut, oder ein Anion einer fluoraliphatischen oder perfluoraromatischen Sulfonsäure ist.

5. Membran nach einem der vorhergehenden Ansprüche, **dadurch gekennzeichnet, dass** der Photoinitiator Cyclopentadienyl(1-methylnaphthalin)eisen-hexafluorphosphat ist.

6. Membran nach einem der vorhergehenden Ansprüche, **dadurch gekennzeichnet, dass** der Photoinitiator 0,1 bis 10 Gew.-% des Harzgewichts ausmacht.

7. Membran nach Anspruch 6, **dadurch gekennzeichnet, dass** der Photoinitiator 0,2 bis 5 Gew.-% des Harzgewichts ausmacht.

8. Membran nach einem der vorhergehenden Ansprüche, **dadurch gekennzeichnet, dass** das Fasermaterial ein Material ist, das aus Kohlenstofffasern, Glasfasern oder einer Mischung dieser Fasern gebildet ist.

9. Membran nach einem der vorhergehenden Ansprüche, **dadurch gekennzeichnet, dass** das Harz ein Bisphenol-A-diglycidylether (DGEBA) oder ein multifunktionelles Acrylderivat eines solchen Harzes ist.

10. Membran nach einem der vorhergehenden Ansprüche, **dadurch gekennzeichnet, dass** der für sichtbare Strahlung durchlässige Polymerfilm die Innenfläche der Membran bildet, während die andere Seite der Verbundschicht mit einer thermischen Abdeckung bedeckt ist, die die Außenfläche dieser Membran bildet.

11. Membran nach einem der Ansprüche 1 bis 9, **dadurch gekennzeichnet, dass** die Verbundschicht zwischen zwei für sichtbare Strahlung durchlässige Polymerfolien eingefügt ist, die gleich oder verschieden sind.

12. Membran nach Anspruch 11, **dadurch gekennzeichnet, dass** einer der Polymerfilme die innere Seite der Membran bildet, während der andere dieser Filme mit einer thermischen Abdeckung bedeckt ist, die die äußere Seite dieser Membran bildet.

13. Membran nach einem der vorhergehenden Ansprüche, **dadurch gekennzeichnet, dass** der Polymerfilm oder die Polymerfilme, der/die für sichtbare Strahlung durchlässig ist/sind, ein oder mehrere Filme aus einem aromatischen Polyimid, einem Polyarylenetherbenzimidazol oder einem Polybenzoxazol ist/sind.

14. Membran nach Anspruch 13, **dadurch gekennzeichnet, dass** der Polymerfilm oder die Polymerfilme, der/die für sichtbare Strahlung durchlässig ist/sind, ein oder mehrere aromatische Polyimidfilme sind.

15. Verfahren zum Festigen einer flexiblen Membran wie in einem der Ansprüche 1 bis 14 definiert, **dadurch gekennzeichnet, dass** es umfasst:
a) Bestrahlen der Membran mit sichtbarer Strahlung durch den mindestens einen Polymerfilm, der für sichtbare Strahlung durchlässig ist, um die Polymerisation des in dieser Membran vorhandenen Harzes zu initiieren, und
b) Erwärmen der Membran, um die Polymerisation des Harzes zu aktivieren,
und dadurch, dass das Erwärmen der Membran gleichzeitig mit oder nach ihrer Bestrahlung durchgeführt werden kann.

16. Verfahren nach Anspruch 15, **dadurch gekennzeichnet, dass** das Erwärmen der Membran nach ihrer Bestrahlung erfolgt.

17. Verwendung einer flexiblen Membran wie in einem der Ansprüche 1 bis 14 definiert, in einer Struktur zum Einsatz durch Aufblasen.

18. Anwendung eines Verfahrens nach Anspruch 15 oder Anspruch 16 zur Festigung einer Struktur zum Einsatz durch Aufblasen.

## Claims

1. Flexible membrane for an inflatably deployable structure, which comprises at least one layer of a composite and at least one polymer film that is permeable to visible radiation and that covers one of the faces of this layer, said composite being formed from a fibrous material impregnated with a composition incorporating an epoxide or epoxy/acrylate resin and a photoinitiator, **characterized in that** the photoinitiator is chosen from iron-arene complex salts of general formula (I) below: 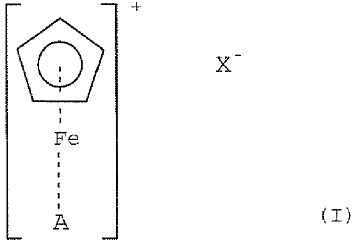 in which A represents an arene group while X represents a non-nucleophilic anion.

2. Membrane according to Claim 1, **characterized in that** the photoinitiator is chosen from iron-arene complex salts of general formula (I) in which the arene group is an aromatic monocyclic or polycyclic group comprising from 6 to 32 carbon atoms, and preferably from 6 to 12 carbon atoms, in the aromatic ring, this group possibly being substituted by one or more groups chosen, independently from one another, from halogen atoms and linear or branched alkyl, alkoxyl, haloalkyl, nitroalkyl, cyanoalkyl and alkoxycarbonyl groups.

3. Membrane according to Claim 2, **characterized in that** the photoinitiator is chosen from iron-arene complex salts of general formula (I) in which the arene group is chosen from benzene, cumene, naphthalene, methylnaphthalene, phenanthrene, fluorene, coronene and ovalene groups.

4. Membrane according to any one of the preceding claims, **characterized in that** the photoinitiator is chosen from iron-arene complex salts of general formula (I) in which the non-nucleophilic anion is a halogen or chlorine anion of an element chosen from boron, phosphorus, arsenic, antimony, iron and bismuth, or an anion of fluoroaliphatic or perfluoroaromatic sulphonic acid.

5. Membrane according to any one of the preceding claims, **characterized in that** the photoinitiator is cyclopentadienyl(1-methylnaphthalene)iron hexafluorophosphate.

6. Membrane according to any one of the preceding claims, **characterized in that** the photoinitiator represents from 0.1% to 10% by weight of the weight of the resin.

7. Membrane according to Claim 6, **characterized in that** the photoinitiator represents from 0.2 to 5% by weight of the weight of the resin.

8. Membrane according to any one of the preceding claims, **characterized in that** the fibrous material is a material formed from carbon fibres, glass fibres or a mixture of these fibres.

9. Membrane according to any one of the preceding claims, **characterized in that** the resin is a bisphenol A diglycidyl ether (BADGE) or a multifunctional acrylic derivative of such a resin.

10. Membrane according to any one of the preceding claims, **characterized in that** the polymer film that is permeable to visible radiation forms the inner face of the membrane, while the other face of the composite layer is covered with a thermal cover that forms the outer face of this membrane.

11. Membrane according to any one of Claims 1 to 9, **characterized in that** the composite layer is inserted between two polymer films that are permeable to visible radiation, and that are identical or different.

12. Membrane according to Claim 11, **characterized in that** one of the polymer films forms the inner face of the membrane, while the other of these films is covered with a thermal cover which forms the outer face of this membrane.

13. Membrane according to any one of the preceding claims, **characterized in that** the polymer film or films that are permeable to visible radiation are one or some aromatic polyimide, polyarylene ether benzimidazole or polybenzoxazole films.

14. Membrane according to Claim 13, **characterized in that** the polymer film or films that are permeable to visible radiation are one or some aromatic polyimide films.

15. Method for stiffening a flexible membrane as defined in any one of Claims 1 to 14, **characterized in that** it comprises:
a) irradiating the membrane with visible radiation through said at least one polymer film that is permeable to visible radiation in order to initiate the polymerization of the resin present in this membrane; and
b) heating the membrane to activate the polymerization of said resin,
and **in that** the heating of the membrane may be carried out at the same time as or after its irradiation.

16. Method according to Claim 15, **characterized in that** the heating of the membrane is carried out after its irradiation.

17. Use of a flexible membrane as defined in any one of Claims 1 to 14, in an inflatably deployable structure.

18. Application of a method according to Claim 15 or Claim 16 for stiffening an inflatably deployable structure.
